# EUROPEAN PATENT APPLICATION

(11) **EP 1 357 620 A1**
(43) Date of publication of application: **29.10.2003**
(21) Application number: 02702919.8
(22) Date of filing: 12.03.2002
(51) Int. Cl.: H01M 8/02, H01M 8/10, H01M 4/88

(54) **METHOD OF MANUFACTURING ELECTROLYTIC FILM ELECTRODE CONNECTION BODY FOR FUEL CELL**

(30) Priority: 15.03.2001 JP 2001073999; 26.03.2001 JP 2001088676
(71) Applicant: MATSUSHITA ELECTRIC INDUSTRIAL CO., LTD., Kadoma-shi, Osaka 571-8501 (JP)
(72) Inventor: MATSUOKA, Hiroaki, Kanonji-shi, Kagawa 768-0063 (JP); KOBAYASHI, Susumu, Ikoma-shi, Nara 630-0134 (JP); HORI, Yoshihiro, Ikoma-shi, Nara 630-0141 (JP); HATOH, Kazuhito, Osaka-shi, Osaka 536-0015 (JP); HOSAKA, Masato, Osaka-shi, Osaka 530-0043 (JP)
(74) Representative: Leson, Thomas Johannes Alois, Dipl.-Ing.
(86) International application number: JP0202321
(87) International publication number: WO02075834

(57) **Abstract**

A method for producing an electrolyte membrane electrode assembly for a fuel cell according to this invention comprises the steps of: laminating a hydrogen-ion conductive polymer membrane on one face of a first shape-retaining film; forming a first catalyst layer on the hydrogen-ion conductive polymer membrane; joining a shape-retaining member to the first catalyst layer side of the hydrogen-ion conductive polymer membrane; removing the first shape-retaining film from the hydrogen-ion conductive polymer membrane; and forming a second catalyst layer on a face of the hydrogen-ion conductive polymer membrane exposed by the removal, so that the hydrogen-ion conductive polymer membrane and the catalyst layers are not damaged even when a thin hydrogen-ion conductive polymer membrane is used.

## Description

### Technical Field

The present invention relates to a method for producing an electrolyte membrane electrode assembly used for fuel cells.

### Background Art

A hydrogen-ion conductive polymer membrane conventionally used for fuel cells has a thickness that is very thin. Thus, it is extremely difficult to form a catalyst layer directly on the hydrogen-ion conductive polymer membrane. More specifically, the thickness of the conventional hydrogen-ion conductive polymer membrane is typically approximately 20 to 50 µm, and the mechanical strength of the membrane itself is also insufficient; therefore, it is difficult to mechanically work the membrane singly. The hydrogen-ion conductive polymer membrane is, for example, stretched by tensile load and easily cut by shear stress in mechanical working, and also, microcracks and pinholes occur upon careless bending thereof.

In order to avoid these problems, great care needs to be taken in handling the hydrogen-ion conductive polymer membrane, and working efficiency is therefore lowered greatly. Further, the hydrogen-ion conductive polymer membrane has properties of swelling slightly right after adhesion of water or an organic solvent thereto and shrinking remarkably upon volatilization of the solvent. Therefore, a large shrinkage of approximately 5 to 10 % may ultimately occur due to the adhesion of water or an organic solvent to the hydrogen-ion conductive polymer membrane in some cases.

Generally, the catalyst layer is formed by applying a catalyst paste containing a dispersant such as water or an organic solvent on the central portion of the hydrogen-ion conductive polymer membrane and drying it. In this case, because of the above-mentioned properties, the central portion of the hydrogen-ion conductive polymer membrane on which the catalyst layer is formed shrinks considerably. On the other hand, the outer peripheral portion on which the catalyst layer is not formed does not shrink at all. Thus, large wrinkles or slacks will consequently occur in the outer peripheral portion of the hydrogen-ion conductive polymer membrane.

These wrinkles or slacks cause the following problems in the process of joining the hydrogen-ion conductive polymer membrane with the catalyst layers formed thereon, carbon papers and gaskets together by hot pressing or the like to produce an electrolyte membrane electrode assembly. That is, clearances are formed at the joining portion between the gasket and the hydrogen-ion conductive polymer membrane, folds are formed at wrinkles, or microcracks occur in the hydrogen-ion conductive polymer membrane itself. In a fuel cell using such a defective electrolyte membrane electrode assembly, leakage of supplied gases occurs, possibly deteriorating cell characteristics.

Thus, Japanese Laid-Open Patent Publication Hei No. 10-64574 discloses a method of simultaneously forming catalyst layers on both sides of a hydrogen-ion conductive polymer membrane by the so-called transfer process. In this method, a catalyst layer is formed on a film-shaped substrate beforehand, a hydrogen-ion conductive polymer membrane is sandwiched between two substrates in such a manner that the catalyst layers thereof are placed inward, and they are pressurized while heated by rollers; in this way, the catalyst layers are transferred onto both sides of the hydrogen-ion conductive polymer membrane from the substrate side. This method can prevent the above-mentioned swelling and shrinkage of the hydrogen-ion conductive polymer membrane caused by water or an organic solvent and offer excellent mass productivity.

This method, however, has a large problem in that the hydrogen-ion conductive polymer membrane having insufficient mechanical strength is handled singly and transported by rollers. That is, when the hydrogen-ion conductive polymer membrane is transported by rolls, microcracks may occur therein due to the tension applied onto the hydrogen-ion conductive polymer membrane, and in some cases, the hydrogen-ion conductive polymer membrane itself may break. In order to prevent them, the hydrogen-ion conductive polymer membrane itself is, in some cases, subjected to mechanical working such as formation of transportation guide holes. However, since the hydrogen-ion conductive polymer membrane is thin, the holes may be deformed, or the function of the guide holes may be impaired due to the break of the hydrogen-ion conductive polymer membrane.

Further, in this method, since thermal stress is locally applied onto the hydrogen-ion conductive polymer membrane in transferring the catalyst layers while sandwiching the hydrogen-ion conductive polymer membrane between heated rollers, wrinkles, slacks and the like occur. Further, due to the influence of the above-mentioned tension and heat, the hydrogen-ion conductive polymer membrane may stretch, thereby causing deviation of the position of the catalyst layers formed. Also, in rewinding, into a roll form, the hydrogen-ion conductive polymer membrane with the catalyst layer transferred on each side, cracks and wear occur in the catalyst layers. Furthermore, a problem of the anode catalyst layer and the cathode catalyst layer contacting each other and contaminating each other arises. Because of these problems, it is not possible to obtain satisfactory cell characteristics in a fuel cell comprising electrolyte membrane electrode assemblies according to the aforementioned manufacturing method.

### Disclosure of Invention

An object of the present invention is to produce and supply an electrolyte membrane electrode assembly for a fuel cell in a stable manner, even in the case of using a thin hydrogen-ion conductive polymer membrane, without causing the hydrogen-ion conductive polymer membrane to have wrinkles, slacks and the like and without causing catalyst layers to have damage such as cracks and wear.

A method for producing an electrolyte membrane electrode assembly for a fuel cell in accordance with the present invention is basically characterized by comprising the steps of: (1) laminating a hydrogen-ion conductive polymer membrane on one face of a first shape-retaining film, (2) forming a first catalyst layer on the hydrogen-ion conductive polymer membrane laminated on the first shape-retaining film, (3) joining a shape-retaining member to the first catalyst layer side of the hydrogen-ion conductive polymer membrane having the first catalyst layer formed thereon, (4) removing the first shape-retaining film from the hydrogen-ion conductive polymer membrane jointed to the shape-retaining member, and (5) forming a second catalyst layer on an exposed face of the hydrogen-ion conductive polymer membrane from which the first shape-retaining film has been removed.

The step (1) is preferably a step of forming the hydrogen-ion conductive polymer membrane by a laminate process in which the hydrogen-ion conductive polymer membrane is heated and pressurized for lamination or by a cast process in which a dispersion of a hydrogen-ion conductive polymer is applied and dried.

The step (2) or (5) is preferably a step of printing or applying a catalyst paste comprising a catalyst and a dispersant onto the hydrogen-ion conductive polymer membrane and then drying it to form the catalyst layer.

Here, preferable modes of the method for producing an electrolyte membrane electrode assembly for a fuel cell in accordance with the present invention are broadly divided into: the case where the shape-retaining member is a second shape-retaining film; and the case where it is a first gasket.

First, when the shape-retaining member is a second shape-retaining film, the production method preferably comprises a step (6) of removing the second shape-retaining film from the hydrogen-ion conductive polymer membrane having the second catalyst layer formed thereon.

Further, the production method more preferably comprises a step (7) of joining a third shape-retaining film, which is distinguishable from the second shape-retaining film, to the second catalyst layer side of the hydrogen-ion conductive polymer membrane having the second catalyst layer formed thereon.

Furthermore, the step (3) or (7) is preferably a step of stacking the shape-retaining film on the catalyst layer side of the hydrogen-ion conductive polymer membrane and heating and pressurizing the film and the membrane for joining them.

Meanwhile, when the shape-retaining member of the present invention is a first gasket, the step (3) is preferably a step of temporarily fixing the first gasket onto the hydrogen-ion conductive polymer membrane around the first catalyst layer at a low temperature.

Also, the production method preferably comprises a step (8) of melting and adhering a second gasket onto the hydrogen-ion conductive polymer membrane around the second catalyst layer at a high temperature.

Further, the step (3) is preferably a step of temporarily fixing the first gasket onto the hydrogen-ion conductive polymer membrane around the first catalyst layer by heating and pressurization at 30 to 100 °C. and the step (8) is preferably a step of melting and adhering the second gasket at a high temperature onto the hydrogen-ion conductive polymer membrane around the second catalyst layer by heating and pressurization at 100 to 180 °C.

Furthermore, each of the first and second shape-retaining films is a thermoplastic resin film having a thickness of 50 to 500 µm.

### Brief Description of Drawings

FIG. 1 has longitudinal sectional views of intermediate assemblies in processes of producing an electrolyte membrane electrode assembly for a fuel cell in an example of the present invention.
FIG. 2 is a longitudinal sectional view of a hydrogen-ion conductive polymer membrane which has catalyst layers formed thereon and which is jointed to second and third shape-retaining films in an example of the present invention.
FIG. 3 has longitudinal sectional views of intermediate assemblies in processes of producing an electrolyte membrane electrode assembly for a fuel cell in another example of the present invention.
FIG. 4 is a longitudinal sectional view of a fuel cell comprising an electrolyte membrane electrode assembly for a fuel cell in examples of the present invention.

### Best Mode for Carrying Out the Invention

The inventors of the present invention have found the following manufacturing method for stable production of an electrolyte membrane electrode assembly for a fuel cell which is, even with the use of a thin hydrogen-ion conductive polymer membrane, defect-free in the hydrogen-ion conductive polymer membrane and catalyst layers.

A method for producing an electrolyte membrane electrode assembly for a fuel cell in accordance with the present invention comprises the steps of: (1) laminating a hydrogen-ion conductive polymer membrane on one face of a first shape-retaining film, (2) forming a first catalyst layer on the hydrogen-ion conductive polymer membrane laminated on the first shape-retaining film, (3) joining a shape-retaining member to the first catalyst layer side of the hydrogen-ion conductive polymer membrane having the first catalyst layer formed thereon, (4) removing the first shape-retaining film from the hydrogen-ion conductive polymer membrane jointed to the shape-retaining member, and (5) forming a second catalyst layer on an exposed face of the hydrogen-ion conductive polymer membrane from which the first shape-retaining film has been removed.

The present invention is basically characterized in that in the manufacturing process of the electrolyte membrane electrode assembly, the hydrogen-ion conductive polymer membrane is handled and processed while being retained by the first shape-retaining film or shape-retaining member. This can solve the above-described problems that may arise in handling and processing a mechanically fragile hydrogen-ion conductive polymer membrane singly and a combination of the hydrogen-ion conductive polymer membrane and catalyst layers.

Specifically, according to the present invention, a thin hydrogen-ion conductive polymer membrane is supported by the first shape-retaining film or shape-retaining member, thereby making it possible to enhance the substantial mechanical strength of the hydrogen-ion conductive polymer membrane. This can suppress, even in the case of careless handling of the thin hydrogen-ion conductive polymer membrane, stretching, bending and cutting of the hydrogen-ion conductive polymer membrane and occurrence of microcracks and pinholes therein. Also, this can effectively reduce, in the steps of forming the catalyst layers on the hydrogen-ion conductive polymer membrane, shrinkage of the hydrogen-ion conductive polymer membrane caused by adhesion of a dispersant such as water or an organic solvent in the catalyst paste and therefore prevent occurrence of wrinkles, slacks, etc.

Preferred embodiments of the method for producing an electrolyte membrane electrode assembly for a fuel cell in accordance with the present invention are broadly divided into (A) the case where the above-mentioned shape-retaining member is a second shape-retaining film and (B) the case where it is a first gasket.

In the following, the best mode for carrying out the present invention will be described in the order of above (A) and (B).

### Embodiment A

This embodiment relates to a method for producing an electrolyte membrane electrode assembly for a fuel cell in which a second shape-retaining film is used as the shape-retaining member.

### (i) Step (1)

In a step (1), a hydrogen-ion conductive polymer membrane is laminated on one face of a first shape-retaining film. As a specific method, a laminate process in which the first shape-retaining film and the hydrogen-ion conductive polymer membrane are stacked and both of them are pressurized by hot plates or heated rollers for joining them may be employed. For example, it is preferable to stack the first shape-retaining film and a supporting film on which the hydrogen-ion conductive polymer membrane is formed beforehand by a cast process or the like so as to sandwich the hydrogen-ion conductive polymer membrane between both films and to pressurize them while heating them.

The hydrogen-ion conductive polymer membrane used therein is a membrane comprising a hydrogen-ion conductive polymer electrolyte such as a perfluorocarbon sulfonic acid, for example. As the perfluorocarbon sulfonic acid, Nafion 112 manufactured by E.I. Du Pont de Nemours & Co. Inc., the U.S., or the like, may be cited. As the hydrogen-ion conductive polymer membrane for a fuel cell, ultra-thin films, each formed beforehand on a supporting film and having a thickness of approximately 20 to 50 µm, are already commercially available and in use. In order to further enhance the ionic conductivity of the hydrogen-ion conductive polymer membrane for improving cell characteristics, the hydrogen-ion conductive polymer membrane has a tendency to become thinner and thinner in the future. The thinner it becomes, the more evident the above-described problems become; therefore, it is thought that the present invention will be of greater significance.

Also, in the step (1). a dispersion of the hydrogen-ion conductive polymer electrolyte may be applied onto the first shape-retaining film and then dried to form the hydrogen-ion conductive polymer membrane. This process is generally called a cast process. The dispersion is prepared by dispersing or dissolving a polymer electrolyte having the same component as that of the hydrogen-ion conductive polymer membrane in a predetermined solvent, and the solvent in the resultant coating film is volatilized and removed so as to obtain the hydrogen-ion conductive polymer membrane.

As the first shape-retaining film, it is preferable to use a thermoplastic resin film having a thickness of 50 to 500 µm, especially a film having a thickness of 100 to 300 µm. When the shape-retaining film has a thickness of less than 50 µm, its mechanical strength becomes insufficient, so that its ability to retain the hydrogen-ion conductive polymer membrane becomes insufficient in the step according to the laminate process, cast process or the like. On the other hand, when it has a thickness of more than 500 µm, it is difficult to rewind by the rolls, resulting in impaired mass productivity.

As the thermoplastic resin for the material of the shape-retaining film, any resin having thermal resistance so as not to deform in the laminate process may be used without any particular limitation. For example, polyethylene terephthalate, polypropylene, polyetherimide, polyimide, fluorocarbon resin, etc. may be used.

In order to enhance the positioning accuracy of the printing or applying portion, guide holes for registration or roll transportation may be formed, if necessary, in the shape-retaining film. Further, when a shape-retaining film having comparatively good thermal and chemical stability is used, it does not undergo damage while being processed, and the shape-retaining film can therefore be recycled.

### (ii) Step (2) and step (5)

In a step (2), a first catalyst layer is formed on the hydrogen-ion conductive polymer membrane retained on the first shape-retaining film. The forming method of the first catalyst layer is substantially the same as the forming method of a catalyst layer in a step (5) in which a second catalyst layer is formed on the hydrogen-ion conductive polymer membrane retained on a second shape-retaining film. Thus, an explanation will be given of both step (2) and step (5).

In the present invention, an anode catalyst layer is formed on one face of the hydrogen-ion conductive polymer membrane, and a cathode catalyst layer on the other face thereof. That is, when the anode catalyst layer is formed in the step (2), the cathode catalyst layer is formed in the step (5). Conversely, when the cathode catalyst layer is formed in the step (2), the anode catalyst layer is formed in the step (5).

As a specific method of forming the first and second catalyst layers, a catalyst paste containing a catalyst and a dispersion medium (or a solvent) is printed or applied onto the central portion of the hydrogen-ion conductive polymer membrane and then dried to form a catalyst layer. The catalyst paste may be prepared by dispersing or dissolving a catalyst and a hydrogen-ion conductive polymer electrolyte having the same component as that of the hydrogen-ion conductive polymer membrane in a solvent. The catalyst paste may be mixed with a small amount of an additive such as a surfactant if necessary.

The catalyst contained in the catalyst layer serves to facilitate electrode reactions, and is obtained by causing a noble metal catalyst to be carried on the surface of carbon fine particles. Generally, carbon fine particles with a Pt-Ru alloy carried on the surface thereof are used as an anode catalyst. The Pt-Ru alloy has the effect of preventing poisoning of the catalyst caused by a trace amount of carbon monoxide gas contained in a fuel gas. As a cathode catalyst, carbon fine particles with Pt carried on the surface thereof are used. Also, the hydrogen-ion conductive polymer electrolyte contained in the catalyst layer intervenes between the catalyst fine particles and between the hydrogen-ion conductive polymer membrane and the catalyst fine particles, and serves to further facilitate electrode reactions.

The liquid obtained by dispersing or dissolving a hydrogen-ion conductive polymer electrolyte in a predetermined solvent beforehand is already commercially available. The solvent of the catalyst paste may be any solvent that is normally used for pastes for application or printing, and it is desirably a solvent having a relatively low boiling point or a low molecular weight. Specifically, water (desirably ion-exchanged water or pure water), primary to tertiary alcohols such as ethanol, n-propanol, isopropyl alcohol, n-butanol, 2-butanol and tert-butanol, alcohol derivatives thereof, organic solvents of ether type, ester type and fluorine type, etc. may be cited. These may be used singly, or in arbitrary combination as a mixed solvent.

At this time, it is necessary to select a solvent so as not to cause precipitation of the hydrogen-ion conductive polymer electrolyte and dispersibility deterioration thereof. Also, it is necessary to select a solvent having an adequate boiling point and an adequate steam pressure in order to effectively form a catalyst layer in a short time. When the solvent has a low boiling point and a high steam pressure, it evaporates too quickly, so that continuous printing and application of the catalyst paste become difficult. When it has a high boiling point and a low steam pressure, on the other hand, the drying process of the printed or applied coating film takes a long time, thereby requiring long-time heating in some cases. It is also possible to add an additive such as a surfactant to the catalyst paste if necessary in order to improve the dispersibility of the hydrogen-ion conductive polymer electrolyte and the catalyst and workability of printing and application.

As the methods for forming a catalyst paste coating film on the hydrogen-ion conductive polymer membrane, printing methods such as screen printing, gravure printing, relief printing and surface printing, doctor blade coating, roll coater coating, cast coater, spray coating, curtain coater, electrostatic coating, etc. may be employed.

These printing methods and application methods may be applied to both of: the case of forming a catalyst layer on an individual basis on a hydrogen-ion conductive polymer membrane jointed to a shape-retaining film; and the case of forming a catalyst layer on a continual basis, while supplying and rewinding a hydrogen-ion conductive polymer membrane joined to a shape-retaining film by a roll method, on the hydrogen-ion conductive polymer membrane.

The amount of noble metal such as Pt or Pt-Ru alloy attached to the carbon fine particles contained in the catalyst layer normally needs to be controlled to approximately 0.2 to 0.4 mg/cm². This attached amount can be readily controlled by the use of the above-listed printing methods and application methods. For example, in screen printing, by optimizing the mesh of a printing plate, thickness of an emulsion, a printing squeegee, applying pressure in printing, etc., the above-mentioned attached amount can be controlled. Further, by optimizing the particle size of the catalyst in the catalyst paste, the amount of the catalyst added, the composition of the solvent, etc, and by adjusting the viscosity of the catalyst paste, or by other means, the amount of the catalyst attached can be controlled and managed with a higher accuracy.

In the above-described steps (2) and (5) of the present invention, since the hydrogen-ion conductive polymer membrane is retained by the shape-retaining film or shape-retaining member, the hydrogen-ion conductive polymer membrane having a smooth surface can be disposed horizontally in the step of forming the catalyst layer. Therefore, the steps (2) and (5) have an advantage that even with the use of any printing method or applying method, it is possible to form a uniform catalyst layer on the hydrogen-ion conductive polymer membrane quite easily.

### (iii) Step (3)

In a step (3), a second shape-retaining film is jointed to the first catalyst layer side of the hydrogen-ion conductive polymer membrane having the first catalyst layer formed thereon. As a specific method, the so-called hot press process, in which the second shape-retaining film is stacked on the first catalyst layer side of the hydrogen-ion conductive polymer membrane and both of them are heated by hot plates or heated rollers, may be employed. As the second shape-retaining film used in this step, the identical film with the first shape-retaining film used in the step (1) may be used.

### (iv) Step (4)

In a step (4), the first shape-retaining film is removed from the hydrogen-ion conductive polymer membrane jointed to the second shape-retaining film. As a result, a face of the hydrogen-ion conductive polymer membrane having no catalyst layer formed thereon is exposed. Subsequently, in the step (5) as described in above (ii), the second catalyst layer is formed on the central portion of the above-mentioned exposed face excluding the outer peripheral portion thereof. This produces an intermediate assembly of an electrolyte membrane electrode assembly in which the hydrogen-ion conductive polymer membrane having the catalyst layer formed on each side thereof is jointed to the second shape-retaining film.

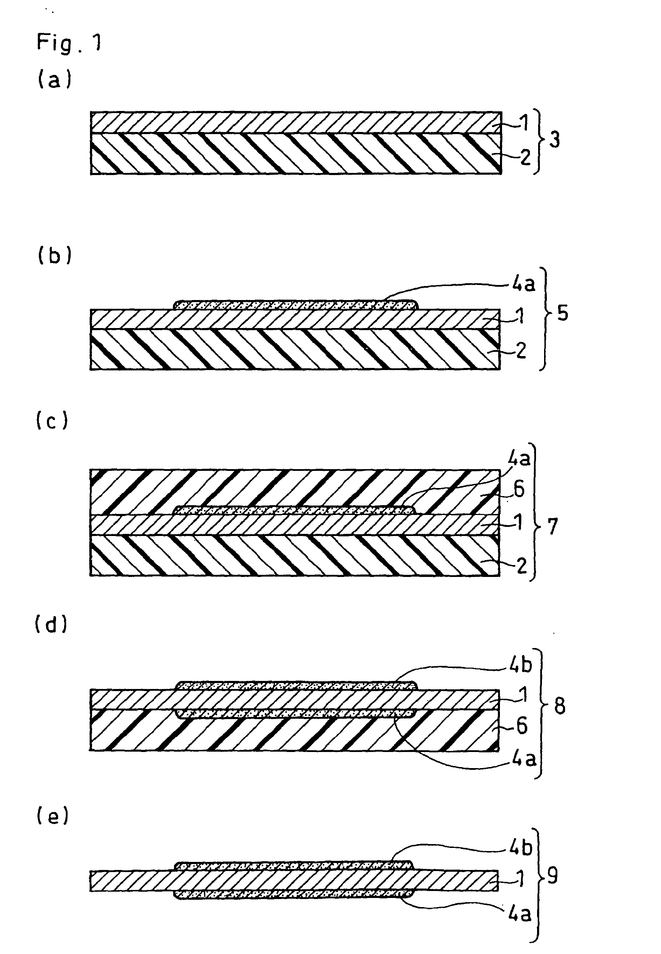

Referring to FIG. 1, the following will describe the method for producing an electrolyte membrane electrode assembly for a fuel cell in accordance with Embodiment A of the present invention in which the second shape-retaining film is used as the shape-retaining member.

First, in the step (1), a hydrogen-ion conductive polymer membrane 1 is laminated on one face of a first shape-retaining film 2 to obtain an intermediate assembly 3 as illustrated in FIG. 1 (a). Next, in the step (2), a first catalyst layer 4a is formed on the hydrogen-ion conductive polymer membrane 1 of the intermediate assembly 3 to obtain an intermediate assembly 5 as illustrated in FIG. 1 (b).

Thereafter, in the step (3), a second shape-retaining film 6 is jointed to the first catalyst layer 4a side of the hydrogen-ion conductive polymer membrane 1 of the intermediate assembly 5 to obtain an intermediate assembly 7 as illustrated in FIG. 1 (c). Subsequently, in the step (4), the first shape-retaining film 2 is removed from the hydrogen-ion conductive polymer membrane 1 of the intermediate assembly 7 so as to expose the hydrogen-ion conductive polymer membrane 1, and then in the step (5), a second catalyst layer 4b is formed on the exposed face of the hydrogen-ion conductive polymer membrane 1 to obtain an intermediate assembly 8 as illustrated in FIG. 1 (d).

The second shape-retaining film 6 of the intermediate assembly 8 serves to prevent deformation and damage of the hydrogen-ion conductive polymer membrane with the catalyst layers having insufficient mechanical strength in the subsequent step for producing the electrolyte membrane electrode assembly. For example, in the step of joining a carbon paper or a gasket to the second catalyst layer 4b side, by pressurizing them in a heated state or the like, it supports the hydrogen-ion conductive polymer membrane with the catalyst layers having inferior mechanical strength, so that its deformation and damage can be prevented. Thus, the intermediate assembly 8 is a useful intermediate assembly in the manufacturing process of the electrolyte membrane electrode assembly.

As described above, in the steps (2) and (5), the catalyst layer is formed on the hydrogen-ion conductive polymer membrane supported by the shape-retaining film; therefore, even if the solvent of the catalyst paste adheres to the hydrogen-ion conductive polymer membrane, swelling and shrinkage of the hydrogen-ion conductive polymer membrane hardly takes place. This can effectively prevent shrinkage of the central portion of the hydrogen-ion conductive polymer membrane, wrinkles and slacks of the outer peripheral portion thereof and damage such as pinholes and microcracks.

Further, in the above-described respective steps of (1) to (5), the hydrogen-ion conductive polymer membrane and the first catalyst layer and the second catalyst layer formed thereon are always retained directly or indirectly by the first shape-retaining film or the second shape-retaining film. This can prevent stretching of the respective catalyst layers and the hydrogen-ion conductive polymer membrane and occurrence of pinholes, cracks, etc, in the respective steps. Furthermore, when each of the intermediate assemblies is rewound into a rolled form for transportation or storage between the steps, the first shape-retaining film or the second shape-retaining film always intervenes between the hydrogen-ion conductive polymer membranes and between the catalyst layers. This can effectively prevent damage such as cracks, separation and wear of the catalyst layers and the hydrogen-ion conductive polymer membrane, mutual contamination of the catalyst layers due to contact of the anode side catalyst layer and the cathode side catalyst layer, or the like, occurring during transportation and storage between the steps.

Also, in the production method in accordance with Embodiment A of the present invention, when a step (6) of removing the second shape-retaining film from the intermediate assembly 8 is further conducted after the steps (1) to (5), an intermediate assembly 9 of the hydrogen-ion conductive polymer membrane having the catalyst layer formed on each side, as illustrated in FIG. 1 (e), can be obtained. When the intermediate assembly 9 is used for producing an electrolyte membrane electrode assembly, respective diffusion layers can be joined simultaneously to the first catalyst layer 4a side and the second catalyst layer 4b side by the hot press process or the like. As the diffusion layers, carbon paper is generally used. Since the intermediate assembly 9 is advantageous for simultaneously forming an anode and a cathode with a single operation, it is a useful intermediate assembly in the production process of the electrolyte membrane electrode assembly.

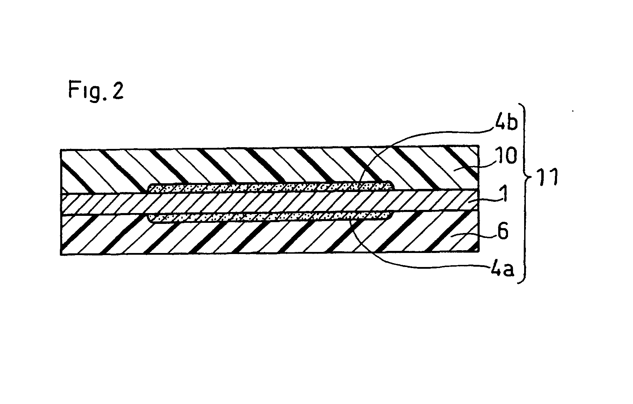

Further, when a step (7) of joining a third shape-retaining film 10 to the first catalyst layer 4a side of the intermediate assembly 8 is conducted after the steps (1) to (5), an intermediate assembly 11 of the hydrogen-ion conductive polymer membrane having the catalyst layer and the shape-retaining film joined to each side, as illustrated in FIG. 2, can be obtained. In the step (7), the so-called hot press process, in which the third shape-retaining film 10 is stacked on the first catalyst layer 4a side of the intermediate assembly 8 and they are pressurized by hot plates or heated rollers, is employed preferably.

In the intermediate assembly 11, the surfaces of the hydrogen-ion conductive polymer membrane 1 and the catalyst layers 4a and 4b are protected by the second and third shape-retaining films 6 and 10. Thus, the intermediate assembly 11 is quite effective for preventing damage of the hydrogen-ion conductive polymer membrane and the catalyst layers when it is stored for an extended period, transported to other places, packaged, or the like.

Further, the catalyst layer 4a and the catalyst layer 4b have almost the same black appearance although they differ in specifications such as kind of noble metal catalyst, and it is therefore often difficult to distinguish them by visual inspection and touching. Thus, there is a fear of mistakenly handling the anode side catalyst layer and the cathode side catalyst layer in the production process of a fuel cell. In order to eliminate this fear, it is quite effective to use, as the third shape-retaining film 10 used for the intermediate assembly 11, one distinguishable from the second shape-retaining film 6 by visual inspection or touching. Specifically, a shape-retaining film that is different in color, film thickness, surface irregularities, etc., or a shape-retaining film with an identification sign may be used, for example. In this case, the first shape-retaining film 2 removed in the step (4) may be reused as the third shape-retaining film 10 in the step (7). For these reasons, the intermediate assembly 11 can also be a useful intermediate assembly in the production process of the electrolyte membrane electrode assembly.

### Embodiment B

The following will describe Embodiment B of the present invention relating to the method for producing an electrolyte membrane electrode assembly for a fuel cell in which a first gasket is used as the shape-retaining member.

### (i) Step (1) and step (2)

As steps (1) and (2), the identical process with the above-described steps (1) and (2) of Embodiment A can be employed.

### (ii) Step (3)

In a step (3), the first gasket is temporarily fixed to a hydrogen-ion conductive polymer membrane having a first catalyst layer formed thereon at a low temperature as the shape-retaining member.

As described above, when a catalyst layer is formed by the above-mentioned printing methods or applying methods, a large shrinkage of approximately 5 to 10 % occurs in the central portion of the hydrogen-ion conductive polymer membrane. As a result, wrinkles, slacks and the like occur in the outer peripheral portion thereof.

In order to solve this problem, according to the present invention, the hydrogen-ion conductive polymer membrane is formed on a first shape-retaining film in the step (1), and the first gasket is temporarily fixed around the first catalyst layer on the hydrogen-ion conductive polymer membrane in the step (3). Since the hydrogen-ion conductive polymer membrane is retained by the first shape-retaining film and the first gasket, the above-mentioned problems occurring in forming the catalyst layer by the above-mentioned printing methods and applying methods can be solved.

The first gasket used here is a sealing member for preventing leakage of supplied gases used in a fuel cell, such as hydrogen gas, city gas, air or oxygen gas, to outside of the reaction system. As the first gasket, for example, a resin sheet having a thickness of approximately 0.2 to 0.4 mm may be used. Specifically, a sheet comprising a resin composed mainly of an ethylene propylene copolymer, or a resin sheet having a surface layer comprising an ethylene propylene copolymer may be used, for example.

In the common method for producing an electrolyte membrane electrode assembly, two gaskets are placed on both faces of a hydrogen-ion conductive polymer membrane and are simultaneously melted and adhered. On the other hand, according to the present invention, the first gasket is pressurized at a relatively low temperature of 30 to 100 °C so that it is temporarily fixed onto the hydrogen-ion conductive polymer membrane in the step (3). Then, in a step (8) which will be described later, a second gasket is pressurized at a relatively high temperature of 100 to 180 °C so that it is melted and adhered. At this time, the first gasket is also melted and adhered simultaneously. In this way, by melting and adhering the first gasket and the second gasket onto the hydrogen-ion conductive polymer membrane, it is possible to prevent leakage of supplied gases from the jointing portions of the hydrogen-ion conductive polymer membrane and the gaskets.

Here, "temporary fixing" according to the present invention refers to producing a laminate having a moderate peel strength. Also, "melting and adhering" refers to melting at least one of the gasket and the hydrogen-ion conductive polymer membrane and thereby joining them integrally.

At the low temperature of 30 to 100 °C in the step (3), the first gasket and the hydrogen-ion conductive polymer membrane are hardly melted and adhered to each other, and they are temporarily fixed to an extent that they do not separate during the operation of the printing process or applying process of the catalyst paste. The hydrogen-ion conductive polymer membrane with the first gasket temporarily fixed thereto is almost free from warpage, deformation and the like, and while this state is retained, subsequent steps (4) and (5) can be conducted.

It is noted that at least one of the first shape-retaining film and the first gasket may be provided beforehand with registration holes or sprocket holes for roll transportation necessary for the printing or applying process. The thickness of the shape-retaining film and the gasket used, and the like, may be selected appropriately so as to facilitate the working of forming these holes.

### (ii) Step (4)

In a step (4), the first shape-retaining film is removed from the hydrogen-ion conductive polymer membrane jointed to the first gasket. Here, the first shape-retaining film can be removed easily only by application of a mechanical action.

### (iii) Step (5)

A second catalyst layer is formed in the central portion of the exposed face of the hydrogen-ion conductive polymer membrane from which the first shape-retaining film has been removed in the same manner as in the step (2).

### (V) Step (8)

Embodiment B does not have the steps of (6) and (7) of Embodiment A, and it conducts a step (8) of melting and adhering the second gasket, at a high temperature, onto the hydrogen-ion conductive polymer membrane having the second catalyst layer formed thereon so as to surround the second catalyst layer. This step also melts and adheres the first gasket temporarily fixed in the step (3) simultaneously.

This produces an intermediate assembly of an electrolyte membrane electrode assembly in which the first gasket, first catalyst layer, hydrogen-ion conductive polymer membrane, second catalyst layer and second gasket are jointed together.

Here, by temporarily fixing the first gasket at a low temperature of 30 to 100 °C in the step (3), the hydrogen-ion conductive polymer membrane and the first gasket are maintained in a state of almost no warpage and deformation. By melting and adhering the first gasket and the second gasket simultaneously on both faces of the hydrogen-ion conductive polymer membrane after the temporary fixing step at a high temperature of 100 to 180 °C, an intermediate assembly having almost no warpage and deformation can be obtained.

It is noted that in the steps (3) and (8), the temperature of temporary fixing and the temperature of melting and adhesion may be modified appropriately depending on the time and pressure of the thermal treatment, etc. However, in modifying the temporary fixing temperature and the melting and adhesion temperature, their respective modifications are preferably made in the above-mentioned temperature ranges.

Also, in the intermediate assemblies of the electrolyte membrane electrode assembly of the present invention obtained in the above manner, the shape-retaining film or the gasket always exists on the periphery of the catalyst layer, and it is therefore possible to prevent microcracks, separation, wear, etc. of the catalyst layer very effectively in the rewinding process or storage process. Therefore, the production method of the present invention is advantageous also in storing the intermediate assembly of the electrolyte membrane electrode assembly over an extended period.

Further, the first shape-retaining film undergoes neither thermal and chemical changes nor deterioration in each step utilizing the laminating process or cast process. Thus, it can be reused in the production method of the present invention. Accordingly, the production method of the present invention is advantageous also in terms of production cost reduction and environmental preservation measure.

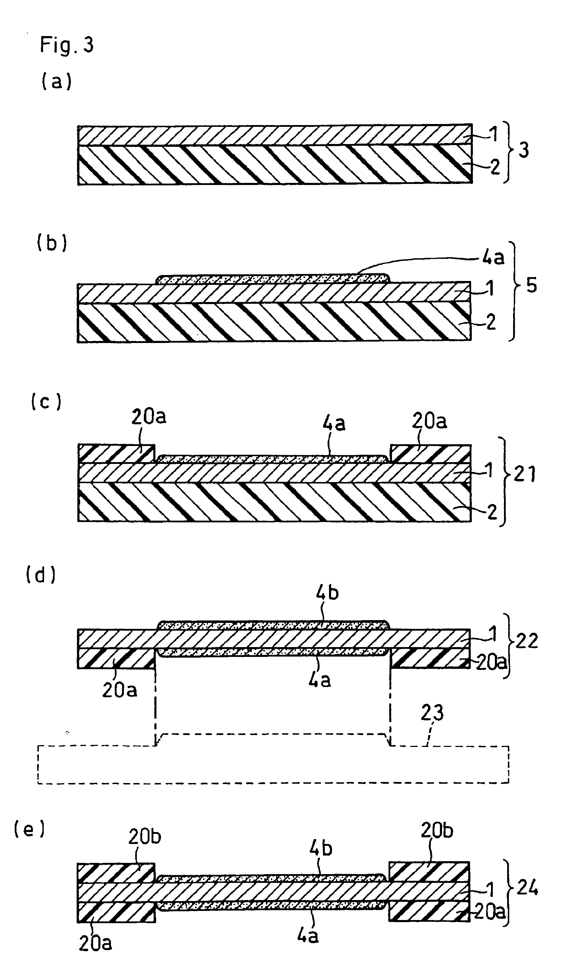

Referring to FIG. 3, the following will describe the method for producing the electrolyte membrane electrode assembly for a fuel cell in accordance with Embodiment B of the present invention in which the first gasket is used as the shape-retaining member.

First, in the step (1) that is the same as that in the production method in accordance with Embodiment A, a hydrogen-ion conductive polymer membrane 1 is laminated on one face of a first shape-retaining film 2. This produces an intermediate assembly 3 as illustrated in FIG. 3 (a). Next, in the step (2) that is the same as that in the production method in accordance with Embodiment A, a first catalyst layer 4a is formed on the hydrogen-ion conductive polymer membrane 1 of the intermediate assembly 3. This produces an intermediate assembly 5 as illustrated in FIG. 3 (b). Subsequently, in the step (3), a first gasket 20a is temporarily fixed onto the hydrogen-ion conductive polymer membrane 1 of the intermediate assembly 5 as the shape-retaining member. This produces an intermediate assembly 21 as illustrated in FIG. 3 (c). Thereafter, in the step (4), the first shape-retaining film 2 is removed from the hydrogen-ion conductive polymer membrane 1 of the intermediate assembly 21 so as to expose the hydrogen-ion conductive polymer membrane 1. Then, in the step (5), a second catalyst layer 4b is formed on the exposed face of the hydrogen-ion conductive polymer membrane 1 to obtain an intermediate assembly 22 as illustrated in FIG. 3 (d). A receiving jig 23 in FIG. 3 (d) will be described later.

Thereafter, in the step (8), a second gasket 20b is melted and adhered onto the outer peripheral portion of the hydrogen-ion conductive polymer membrane 1 on the second catalyst layer 4b side of the intermediate assembly 22. Simultaneously with this, the first gasket 20a temporarily fixed in the step (3) is also melted and adhered onto the outer peripheral portion of the hydrogen-ion conductive polymer membrane 1 on the first catalyst layer 4a side. This produces an intermediate assembly 24 of the electrolyte membrane electrode assembly.

In the following, the present invention will be described more concretely with reference to examples, but the present invention is not to be limited only to these.

### Example 1

In accordance with the procedure as illustrated in (a) to (e) of FIG. 1, an intermediate assembly 9 of an electrolyte membrane electrode assembly, having catalyst layers 4a and 4b formed on both faces, respectively, of a hydrogen-ion conductive polymer membrane 1, was produced, and using this, a fuel cell was produced. First, the hydrogen-ion conductive polymer membrane 1 with a thickness of 30 µm was laminated on a first shape-retaining film 2 of a polyethylene terephthalate film with a thickness of 190 µm to produce an intermediate assembly 3 of FIG. 1 (a). The hydrogen-ion conductive polymer membrane 1 used was composed of a perfluorocarbon sulfonic acid represented by the formula: 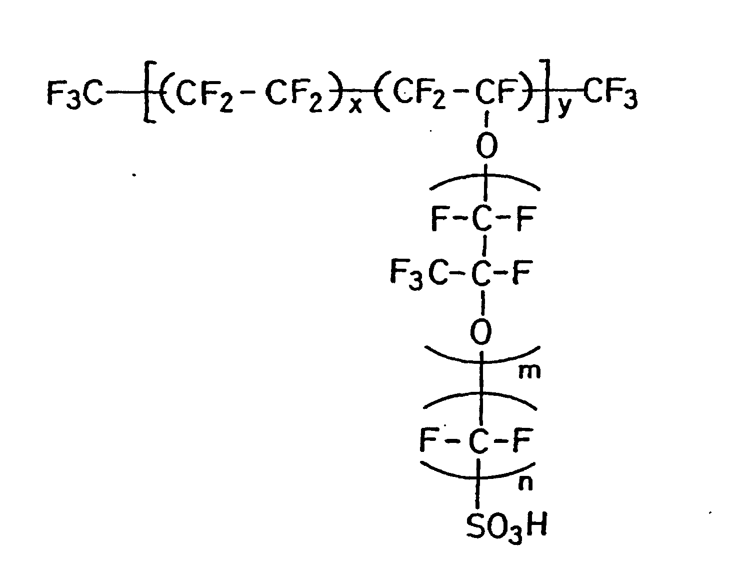 (wherein x=5 to 13.5, y≒1000, m=1, and n=2).

The hydrogen-ion conductive polymer membrane 1 was laminated on the first shape-retaining film 2 by the so-called transfer process. Specifically, first, the hydrogen-ion conductive polymer membrane 1 formed on a supporting film beforehand by the cast process and the first shape-retaining film 2 were stacked. Subsequently, this was pressurized between two heated rollers coated with silicon rubber, and the supporting film was then removed therefrom. The surface temperature of the rollers was 110 °C, the feed rate thereof was approximately 10 mm/s. and the applying pressure was approximately 1 MPa.

The intermediate assembly 3 was almost free from warpage or deformation, and the hydrogen-ion conductive polymer membrane 1 itself was observed to have no damage such as microcracks or pinholes. Further, the hydrogen-ion conductive polymer membrane 1 adequately adhered to the first shape-retaining film 2, so that no separation occurred when the intermediate assembly 3 was bent at a curvature radius (R) of approximately 50 mm.

Next, an anode catalyst paste was screen printed on the hydrogen-ion conductive polymer membrane 1 and was allowed to stand at room temperature to volatilize the solvent. This formed the first catalyst layer 4a (anode side catalyst layer), thereby producing an intermediate assembly 5 as illustrated in FIG. 1 (b). The amount of Pt-Ru alloy attached to carbon fine particles in the catalyst layer 4a was 0.3 mg/cm², and the thickness of the catalyst layer 4a was approximately 10 µm. The anode catalyst used was carbon black with an average particle size of 50 to 60 nm in which a Pt-Ru alloy with an average particle size of 2 to 3 nm was carried at 50 wt%. The anode catalyst paste was prepared by adding 15 g of ion-exchanged water to 5 g of the catalyst to form a mixture, adding 30 g of an ethanol dispersion containing 91 wt% perfluorocarbon sulfonic acid and 10 g of isopropyl alcohol to the mixture, and mixing the resultant while applying ultrasonic vibration. The screen printing was conducted using a 200 mesh stainless steel plate and a urethane squeegee.

Subsequently, the intermediate assembly 5 and a second shape-retaining film 6 were stacked, and this stack was inserted and pressurized between two heated rollers coated with silicon rubber to produce an intermediate assembly 7 as illustrated in FIG. 1 (c). The second shape-retaining film 6 used was a polyethylene terephthalate film, having a thickness of 190 µm, of which one face was treated so as to become roughened. The face of the second shape-retaining film 6 not subjected to the roughening treatment was jointed to the hydrogen-ion conductive polymer membrane 1 and the catalyst layer 4a. The surface temperature of the rollers was 110 °C, the feed rate of the intermediate assembly 5 and the second shape-retaining film 6 was approximately 10 mm/s, and the applying pressure was approximately 1 MPa.

The intermediate assembly 7 was almost free from warpage or deformation, and the hydrogen-ion conductive polymer membrane 1 itself was observed to have no damage such as microcracks or pinholes. Further, the hydrogen-ion conductive polymer membrane 1 adequately adhered to the first and second shape-retaining films 2 and 6, so that no separation occurred when the intermediate assembly 7 was bent at an R of approximately 50 mm.

Then, the first shape-retaining film 2 was removed from the intermediate assembly 7. A cathode catalyst paste was screen printed on the face of the hydrogen-ion conductive polymer membrane 1 exposed by the removal and was allowed to stand at room temperature to volatilize the solvent. This formed the second catalyst layer 4b (cathode side catalyst layer). In the above-described manner, an intermediate assembly 8 as illustrated in FIG. 1 (d) was produced.

The screen printing was conducted using a 200 mesh stainless steel plate and a urethane squeegee. The amount of Pt attached to carbon fine particles in the second catalyst layer 4b was 0.3 mg/cm², and the film thickness was approximately 10 µm. The cathode catalyst used was carbon black with an average particle size of 50 to 60 nm in which Pt with an average particle size of 3 nm was carried at 50 wt%. The catahode catalyst paste was prepared by adding 15 g of ion-exchanged water to 5 g of the catalyst to form a mixture, adding 30 g of an ethanol dispersion containing 91 wt% perfluorocarbon sulfonic acid and 10 g of isopropyl alcohol serving as the solvent to the mixture, and mixing the resultant while applying ultrasonic vibration.

Thereafter, the second shape-retaining film 6 was removed from the intermediate assembly 8 to produce the hydrogen-ion conductive polymer membrane 1 with the catalyst layers 4a and 4b formed on both faces (intermediate assembly 9). Then, using the intermediate assembly 9, a fuel cell was produced.

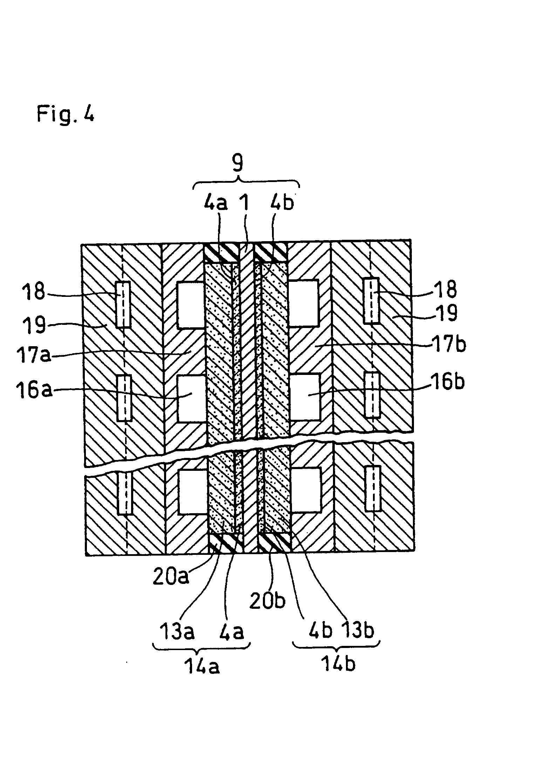

FIG. 4 is a longitudinal sectional view of the fuel cell produced. An anode diffusion layer 13a and a cathode diffusion layer 13b, both of which were made of carbon paper having pores for gas permeation, were jointed to the outer faces of the catalyst layers 4a and 4b, respectively, of the intermediate assembly 9. This formed an anode 14a and a cathode 14b. Further, gaskets 20a and 20b were melted and adhered onto both faces, respectively, of the outer peripheral portion of the hydrogen-ion conductive polymer membrane 1 to form an electrolyte membrane electrode assembly. An anode-side conductive separator plate 17a having a gas flow channel 16a and a cathode-side conductive separator plate 17b having a gas flow channel 16b were disposed outside the diffusion layers 13a and 13b, respectively. A cooling plate 19 having a cooling water flow channel 18 was disposed outside each of the conductive separator plates 17a and 17b.

Discharge testing was conducted while the cell temperature of the fuel cell thus produced was held at 75 °C. A hydrogen gas humidified and heated to have a dew point of 75 °C was supplied to the anode side. Also, air humidified and heated to have a dew point of 65 °C was supplied to the cathode side. The discharge conditions were: hydrogen gas utilization rate 70%; air utilization rate 40%; and current density 0.7 A/cm². As a result, a favorable output voltage of 0.68 V was obtained.

### Example 2

In accordance with the procedure as illustrated in (a) to (e) of FIG. 1, an intermediate assembly 9 of an electrolyte membrane electrode assembly, having catalyst layers 4a and 4b formed on both faces, respectively, of a hydrogen-ion conductive polymer membrane 1, was produced, and using this, a fuel cell was produced.

First, an ethanol dispersion containing the same perfluorocarbon sufonic acid as that used in Example 1 at 91 wt% was applied onto a first shape-retaining film 2 of a polypropylene film having a thickness of 50 µm and was dried. The feed rate of the first shape-retaining film was 0.7 m/min. As for the application method, the dispersion was reapplied three times by means of a blade having a height of 0.16 mm. The applied coating film was dried by leaving it at room temperature, thereby to form the hydrogen-ion conductive polymer membrane 1 with a thickness of 30 µm on the first shape-retaining film 2. In the above manner, an intermediate assembly 3 as illustrated in FIG. 1 (a) was produced.

The intermediate assembly 3 was almost free from warpage or deformation, and the hydrogen-ion conductive polymer membrane 1 itself also had no damage such as microcracks or pinholes. Further, the hydrogen-ion conductive polymer membrane 1 adequately adhered to the first shape-retaining film 2, so that no separation occurred when the intermediate assembly 3 was bent at an R of approximately 50 mm.

Next, the anode-side catalyst layer 4a was formed on the hydrogen-ion conductive polymer membrane 1 of the intermediate assembly 3 to produce an intermediate assembly 5 as illustrated in FIG. 1 (b). The catalyst layer 4a was formed in the same manner as in Example 1 except for the use of n-propanol in place of isopropyl alcohol as the solvent of the anode catalyst paste. The amount of Pt-Ru alloy attached to carbon fine particles of the catalyst layer 4a formed was 0.3 mg/cm². The thickness of the catalyst layer 4a was approximately 10 µm.

Subsequently, an intermediate assembly 7 as illustrated in FIG. 1 (c) was formed in the same manner as in Example 1 except for the use of a polyimide film with a thickness of 100 µm as a second shape-retaining film 6 under the conditions of a hot plate surface temperature of 130 °C and an applying pressure of approximately 5 MPa.

The intermediate assembly 7 was almost free from warpage or deformation, and the hydrogen-ion conductive polymer membrane 1 itself also had no damage such as microcracks or pinholes. Further, in the intermediate assembly 7, the hydrogen-ion conductive polymer membrane 1 adequately adhered to the first and second shape-retaining films 2, so that no separation occurred when the intermediate assembly 7 was bent at an R of approximately 50 mm.

Then, the first shape-retaining film 2 was removed from the intermediate assembly 7 to expose the hydrogen-ion conductive polymer membrane 1, and the second catalyst layer 4b (cathode-side catalyst layer) was formed on the exposed face of the hydrogen-ion conductive polymer membrane 1. The second catalyst layer 4b was formed in the same manner as in Example 1 except for the use of n-propanol in place of isopropyl alcohol as the solvent of the cathode catalyst paste. In the above-described manner, an intermediate assembly 8 as illustrated in FIG. 1 (d) was produced. The amount of Pt attached to carbon fine particles in the second catalyst layer 4b formed was 0.3 mg/cm². Also, the thickness of the second catalyst layer 4b was approximately 10 µm.

Thereafter, the second shape-retaining film 6 was removed from the intermediate assembly 8 to produce the intermediate assembly 9 as illustrated in FIG. 2. Using the intermediate assembly 9, a fuel cell was produced in the same manner as in Example 1. The fuel cell was subjected to discharge testing in the same manner as in Example 1. As a result, a favorable output voltage of 0.68 V was obtained.

### Example 3

In accordance with the procedure as illustrated in (a) to (e) of FIG. 3, an intermediate assembly 24 of an electrolyte membrane electrode assembly, in which catalyst layers 4a and 4b were formed on both faces, respectively, of a hydrogen-ion conductive polymer membrane 1 and gaskets 20a and 20b were joined thereto, was produced. Further, using this, a fuel cell was produced.

First, in the identical manner with that of Example 1, an intermediate assembly 3 as illustrated in FIG. 3 (a) was produced. The intermediate assembly 3 had almost no warpage and deformation. Also, the hydrogen-ion conductive polymer membrane 1 itself was observed to have no damage such as microcracks or pinholes and was therefore in a good state. Further, in the intermediate assembly 3, the hydrogen-ion conductive polymer membrane 1 adequately adhered to a shape-retaining film 2, so that no separation occurred when it was bent at an R of approximately 50 mm. Next, in the identical manner with that of Example 1, an intermediate assembly 5 as illustrated in FIG. 3 (b) was produced.

Subsequently, the first gasket 20a was disposed on the outer peripheral portion of the hydrogen-ion conductive polymer membrane 1 of the intermediate assembly 5 on which the catalyst layer 4a was not formed, and they were inserted between two heated rollers so that the first gasket 20a was temporarily fixed onto the hydrogen-ion conductive polymer membrane 1. This produced an intermediate assembly 21 as illustrated in FIG. 3 (c). As the rollers, ones whose surfaces were coated with silicone rubber were used.

The first gasket 20a was prepared by stamping a resin sheet comprising an ethylene propylene copolymer with a Thomson die. Also, the rollers were used under the conditions of a surface temperature of 90°C, a feed rate of approximately 10 mm/s and an applying pressure of approximately 1 MPa.

The intermediate assembly 21 was almost free from warpage or deformation. Also, the hydrogen-ion conductive polymer membrane 1 and the catalyst layer 4a themselves were observed to have no damage such as microcracks or pinholes and were therefore in a good state. Further, in the intermediate assembly 21, the hydrogen-ion conductive polymer membrane 1 adequately adhered to the shape-retaining film 2 and the first gasket 6 (sic), so that no separation occurred when the intermediate assembly 21 was bent at an R of approximately 50 mm.

Next, the first shape-retaining film 2 was removed manually from the intermediate assembly 21. In the same manner as in Example 1, the second catalyst layer 4b (cathode-side catalyst layer) was formed on one face of the hydrogen-ion conductive polymer membrane 1 which was exposed by the removal. This produced an intermediate assembly 22 as illustrated in FIG. 3 (d).

At this time, since the thickness of the portion of the hydrogen-ion conductive polymer membrane 1 with the first catalyst layer 4a formed thereon was different from the thickness of the portion thereof with the first gasket 20a formed thereon, printing of the catalyst paste was conducted using a receiving jig 23 which was indicated by the broken line below FIG. 3 (e) (sic). The receiving jig 23 could be utilized also for positioning purpose.

Here, in the steps of forming the first catalyst layer 4a and the second catalyst layer 4b, since the hydrogen-ion conductive polymer membrane had almost no warpage and deformation, printing of the catalyst paste was possible by disposing the membrane horizontally without requiring any special apparatus or technique. As a result, it was also possible to form a catalyst layer having stable quality.

Subsequently, the second gasket 20b was disposed around the portion of the intermediate assembly 22 on which the second catalyst layer 4b was formed, and they were inserted between two heated rollers so that they were melted and adhered to produce the intermediate assembly 24 as illustrated in FIG. 3 (e). As the rollers, ones whose surfaces were coated with silicone rubber were used.

The second gasket 20b used was prepared by stamping a resin sheet comprising an ethylene propylene copolymer with a Thompson die. Also, the rollers were used under the conditions of a surface temperature of 150°C, a feed rate of approximately 5 mm/s and an applying pressure of approximately 1 MPa.

The intermediate assembly 24 was almost free from warpage and deformation. Also, the hydrogen-ion conductive polymer membrane 1 and the catalyst layers themselves were observed to have no damage such as microcracks or pinholes and were therefore in a good state. Further, in the intermediate assembly 24, the hydrogen-ion conductive polymer membrane 1 completely adhered to the first gasket 20a and the second gasket 20b, so that no separation occurred when the intermediate assembly 24 was bent at an R of approximately 50 mm.

Using the intermediate assembly 24 of an electrolyte membrane electrode assembly, a fuel cell having the same structure as that of the fuel cell of Example 1 as illustrated in FIG. 4 was produced. First, an anode diffusion layer 13a and a cathode diffusion layer 13b, both of which were made of carbon paper, were jointed to the outer faces of the catalyst layers 4a and 4b, respectively, of the intermediate assembly 24 to form an anode 14a and a cathode 14b, which produced an electrolyte membrane electrode assembly.

An anode-side conductive separator plate 17a having a gas flow channel 16a and a cathode-side conductive separator plate 17b having a gas flow channel 16b were disposed outside the diffusion layers 13a and 13b, respectively, of the electrolyte membrane electrode assembly. A cooling plate 19 having a cooling water flow channel 18 was disposed outside each of the conductive separator plates 17a and 17b. The fuel cell thus produced was subjected to discharging test under the same conditions as those of Example 1, and as a result, a favorable output voltage of 0.68 V was obtained.

### Example 4

In accordance with the procedure as illustrated in (a) to (e) of FIG. 3, an intermediate assembly 24 of an electrolyte membrane electrode assembly, in which catalyst layers 4a and 4b were formed on both faces, respectively, of a hydrogen-ion conductive polymer membrane 1 and gaskets 20a and 20b were joined thereto, was produced. Further, using this, a fuel cell was produced.

First, in the same manner as in Example 2, the hydrogen-ion conductive polymer membrane 1 having a thickness of 30 µm was formed on a shape-retaining film 2 to produce an intermediate assembly 3 as illustrated in FIG. 3 (a). The intermediate assembly 3 had almost no warpage and deformation. Also, the hydrogen-ion conductive polymer membrane 1 itself was observed to have no damage such as microcracks or pinholes and was therefore in a good state. Further, in the intermediate assembly 3, the hydrogen-ion conductive polymer membrane 1 adequately adhered to the shape-retaining film 2, so that no separation occurred when the intermediate assembly 3 was bent at an R of approximately 50 mm.

Next, in the same manner as in Example 2, the anode-side catalyst layer 4a was formed on the hydrogen-ion conductive polymer membrane 1 of the intermediate assembly 3 to obtain an intermediate assembly 5 as illustrated in FIG. 3 (b).

Subsequently, an intermediate assembly 21 as illustrated in FIG. 3 (c) was obtained in the same manner as in Example 3 except for the use of two hot plates whose surfaces were coated with silicon rubber in place of the rollers. The surface temperature of the hot plates were 80°C, and the applying pressure was approximately 1 MPa. The intermediate assembly 21 was almost free from warpage and deformation. Also, in the intermediate assembly 21, the hydrogen-ion conductive polymer membrane 1 and the catalyst layers themselves were observed to have no damage such as microcracks or pinholes and were therefore in a good state. Further, in the intermediate assembly 21, the hydrogen-ion conductive polymer membrane 1 adequately adhered to the shape-retaining film 2 and the first gasket 20a, so that no separation occurred when the intermediate assembly 21 was bent at an R of approximately 50 mm.

Next, the second catalyst layer 4b was formed in the same manner as in Example 3 except for the use of n-propanol as the organic solvent to obtain an intermediate assembly 22 as illustrated in FIG. 3 (d).

Subsequently, the intermediate assembly 24 of an electrolyte membrane electrode assembly as illustrated in FIG. 3 (e) was obtained in the same manner as in Example 3 except for the use of two hot plates whose surfaces were coated with silicon rubber in place of the rollers. The surface temperature of the hot plates were 135°C, and the applying pressure was approximately 1 MPa.

The intermediate assembly 24 of an electrolyte membrane electrode assembly was almost free from warpage and deformation. Also, the hydrogen-ion conductive polymer membrane and the catalyst layers themselves were observed to have no damage such as microcracks or pinholes and were therefore in a good state. Further, in the intermediate assembly 24, the hydrogen-ion conductive polymer membrane 1 completely adhered to the first gasket 20a and the second gasket 20b, so that no separation occurred when the intermediate assembly 24 was bent at an R of approximately 50 mm.

Using the intermediate assembly 24, a fuel cell having the structure as illustrated in FIG. 4 was produced in the same manner as in Example 3. The fuel cell produced was subjected to discharging test under the same conditions as those of Example 1, and as a result, a favorable output voltage of 0.68 V was obtained.

In printing the catalyst paste in Example 3 and Example 4, registration holes or sprocket holes for roll transportation were provided beforehand on the outer portions of the first shape-retaining film 2, first gasket 20a and second gasket 20b on which the catalyst layer was not formed. This facilitated formation of the catalyst layer 4a and the catalyst layer 4b at the predetermined, opposed positions.

Further, in Example 3 and Example 4, the first gasket 20a on the first catalyst layer 4a side and the second gasket 20b on the second catalyst layer 4b side were colored to black and brown, respectively, and were used. This made it possible to easily distinguish the first catalyst layer 4a from the second catalyst layer 4b. Other than this, for example, the surface of the first gasket 20a on the first catalyst layer 4a side may be given a glossy surface finish while the surface of the second gasket 20b on the second catalyst layer 4b side may be given a non-glossy surface finish, and in this way, the use of two kinds of gaskets that are distinguishable by looking at or touching them is effective.

### Industrial Applicability

According to the present invention, even with the use of a thin hydrogen-ion conductive polymer membrane, it is possible to produce an electrolyte membrane electrode assembly for a fuel cell with favorable workability without causing damage such as wrinkles, slacks, microcracks and pinholes to the hydrogen-ion conductive polymer membrane and without causing damage such as cracks, wear and contamination to catalyst layers. The use of this electrolyte membrane electrode assembly makes it possible to provide a fuel cell having excellent characteristics.

## Claims

1. A method for producing an electrolyte membrane electrode assembly for a fuel cell, comprising the steps of:
(1) laminating a hydrogen-ion conductive polymer membrane on one face of a first shape-retaining film,
(2) forming a first catalyst layer on the hydrogen-ion conductive polymer membrane laminated on said first shape-retaining film,
(3) joining a shape-retaining member to the first catalyst layer side of the hydrogen-ion conductive polymer membrane having said first catalyst layer formed thereon,
(4) removing said first shape-retaining film from the hydrogen-ion conductive polymer membrane jointed to said shape-retaining member, and
(5) forming a second catalyst layer on an exposed face of the hydrogen-ion conductive polymer membrane from which said first shape-retaining film has been removed.

2. The method for producing an electrolyte membrane electrode assembly for a fuel cell in accordance with claim 1, wherein said step (1) is a step of forming said hydrogen-ion conductive polymer membrane by a laminate process in which the hydrogen-ion conductive polymer membrane is heated and pressurized for lamination or by a cast process in which a dispersion of a hydrogen-ion conductive polymer is applied and dried.

3. The method for producing an electrolyte membrane electrode assembly for a fuel cell in accordance with claim 1, wherein said step (2) or (5) is a step of printing or applying a catalyst paste comprising a catalyst and a dispersant onto said hydrogen-ion conductive polymer membrane and then drying it to form said catalyst layer.

4. The method for producing an electrolyte membrane electrode assembly for a fuel cell in accordance with claim 1, wherein said shape-retaining member is a second shape-retaining film.

5. The method for producing an electrolyte membrane electrode assembly for a fuel cell in accordance with claim 4, further comprising a step (6) of removing said second shape-retaining film from the hydrogen-ion conductive polymer membrane having the second catalyst layer formed thereon.

6. The method for producing an electrolyte membrane electrode assembly for a fuel cell in accordance with claim 4, further comprising a step (7) of joining a third shape-retaining film, which is distinguishable from said second shape-retaining film, to the second catalyst layer side of the hydrogen-ion conductive polymer membrane having said second catalyst layer formed thereon.

7. The method for producing an electrolyte membrane electrode assembly for a fuel cell in accordance with claim 4, wherein said step (3) or (7) is a step of stacking said shape-retaining film on the catalyst layer side of said hydrogen-ion conductive polymer membrane and heating and pressurizing said film and said membrane for joining them.

8. The method for producing an electrolyte membrane electrode assembly for a fuel cell in accordance with claim 4, wherein each of said first and second shape-retaining films is a thermoplastic resin film having a thickness of 50 to 500 µm.

9. The method for producing an electrolyte membrane electrode assembly for a fuel cell in accordance with claim 1, wherein said shape-retaining member is a first gasket.

10. The method for producing an electrolyte membrane electrode assembly for a fuel cell in accordance with claim 9, wherein said step (3) is a step of temporarily fixing the first gasket onto the hydrogen-ion conductive polymer membrane around said first catalyst layer at a low temperature.

11. The method for producing an electrolyte membrane electrode assembly for a fuel cell in accordance with claim 9, further comprising a step (8) of melting and adhering a second gasket onto the hydrogen-ion conductive polymer membrane around said second catalyst layer at a high temperature.

12. The method for producing an electrolyte membrane electrode assembly for a fuel cell in accordance with claim 11, wherein said step (3) is a step of temporarily fixing the first gasket onto the hydrogen-ion conductive polymer membrane around said first catalyst layer by heating and pressurization at 30 to 100 °C, and said step (8) is a step of melting and adhering the second gasket at a high temperature onto the hydrogen-ion conductive polymer membrane around said second catalyst layer by heating and pressurization at 100 to 180 °C.

13. The method for producing an electrolyte membrane electrode assembly for a fuel cell in accordance with claim 9, wherein said first shape-retaining film is a thermoplastic resin film having a thickness of 50 to 500 µm.
